# EUROPÄISCHE PATENTSCHRIFT

(11) **EP 1 150 024 B1**
(45) Veröffentlichungstag und Bekanntmachung des Hinweises auf die Patenterteilung: **28.04.2004**
(21) Anmeldenummer: 01109226.9
(22) Anmeldetag: 14.04.2001
(51) Int. Cl.: F16B 13/08

(54) **Befestigungselement**
Fastening element
Elément de fixation

(30) Priorität: 26.04.2000 DE 20007514 U
(43) Veröffentlichungstag der Anmeldung: 31.10.2001
(73) Patentinhaber: fischerwerke Artur Fischer GmbH & Co. KG, 72178 Waldachtal (DE)
(72) Erfinder: Lind, Stefan, 72178 Waldachtal (DE); Bohnet, Hartmut, 72178 Waldachtal (DE); Postler, Detlef, 72160 Horb (DE)

(56) Entgegenhaltungen:
- EP-A- 0 439 706
- DE-A- 4 030 498
- DE-C- 19 751 124

## Beschreibung

Die Erfindung betrifft ein Befestigungselement mit den Merkmalen des Oberbegriffs des Anspruchs 1.

Das Befestigungselement ist zur Verankerung in einem eine Hinterschneidung aufweisenden Bohrloch, insbesondere mit geringer Bohrlochtiefe, wie sie beispielsweise in Rückseiten von Fassadenplatten zu deren Befestigung angebracht werden, vorgesehen.

Ein derartiges Befestigungselement ist bekannt aus der EP 0 440 896 B1. Das bekannte Befestigungselement weist einen Gewindeschaft mit einem Spreizkonus an seinem einen Ende auf. Auf den Gewindeschaft ist ein Spreizring aufgesetzt, der durch Aufschieben auf den Spreizkonus aufweitbar ist. Um den Spreizring aufweiten zu können hat der Spreizring beispielsweise in Draufsicht eine ovale Form und/oder ist in Seitenansicht gewellt. Zur Verankerung in einem eine Hinterschneidung aufweisenden Bohrloch in beispielsweise einer Rückseite einer Fassadenplatte wird das bekannte Befestigungselement mit seinem Spreizkonus voran in das Bohrloch eingesetzt und anschließend der Spreizring mit einem rohrförmigen Setzwerkzeug auf den Spreizkonus aufgeschoben und dadurch aufgeweitet. Der aufgeweitete Spreizring hintergreift die Hinterschneidung des Bohrlochs und verankert dadurch das Befestigungselement formschlüssig in der Fassadenplatte. Der Gewindeschaft des Befestigungselements steht senkrecht von der Rückseite der Fassadenplatte ab, so dass die Fassadenplatte beispielsweise an einer Stahl-Unterkonstruktion anschraubbar ist. Üblicherweise wird eine Anzahl der bekannten Befestigungselemente zur Befestigung der Fassadenplatte an der Unterkonstruktion in der Fassadenplatte verankert.

Das bekannte Befestigungselement hat den Nachteil, dass sein Spreizring nur dann in der auf den Spreizkonus aufgeschobenen, aufgeweiteten Stellung gesichert gehalten ist, wenn auf seinen Gewindeschaft etwas aufgeschraubt ist, das den Spreizring in der auf den Spreizkonus aufgeschobenen Stellung hält, also beispielsweise wenn die Fassadenplatte an der Unterkonstruktion angeschraubt ist. Ist nichts auf den Gewindeschaft des Befestigungselements aufgeschraubt, kann der Spreizring vom Spreizkonus rutschen, wodurch sich die Verankerung des Befestigungselements in der Fassadenplatte lockert und u. U. das Befestigungselement aus der Fassadenplatte löst.

Der Erfindung liegt die Aufgabe zugrunde, ein Befestigungselement der vorstehend erläuterten Art so weiterzubilden, daß es nach seiner Verankerung in einem eine Hinterschneidung aufweisenden Bohrloch zuverlässig im Bohrloch verankert bleibt.

Diese Aufgabe wird erfindungsgemäß durch die Merkmale des Anspruchs 1 gelöst. Das erfindungsgemäße Befestigungselement mit den Merkmalen des Anspruchs 1 weist eine Setzhülse auf, die axial verschieblich auf seinen Schaft aufgesetzt ist. Durch Verschieben der Setzhülse in Richtung des Spreizkonus schiebt die Setzhülse den Spreizring auf den Spreizkonus auf, wodurch der Spreizring aufgeweitet wird. Auf diese Weise lässt sich das erfindungsgemäße Befestigungselement in einem eine Hinterschneidung aufweisenden Bohrloch verankern.

Des Weiteren weist das erfindungsgemäße Befestigungselement zwei Rasteinrichtungen auf. Die erste Rasteinrichtung hält die Setzhülse verliersicher auf dem Schaft des Befestigungselements. Dies hat den Vorteil, dass die Setzhülse als Setzwerkzeug für das Aufweiten des Spreizrings immer am Befestigungselement verfügbar ist.

Die zweite Rasteinrichtung hält die Setzhülse in einer in Richtung des Spreizkonus verschobenen Stellung. In dieser Stellung hält die Setzhülse den aufgeweiteten Spreizring in seiner auf den Spreizkonus aufgeschobenen Stellung. Dies hat den Vorteil, dass der Spreizkonus nach dem Aufweiten nicht vom Spreizkonus herunterrutschen kann, sondern sicher in seiner auf den Spreizkonus aufgeschobenen Stellung verbleibt, in der der Spreizring vom Spreizkonus aufgeweitet gehalten wird. Das erfindungsgemäße Befestigungselement verbleibt dadurch unabhängig davon, ob es mit irgendeinem Bauteil verschraubt ist, zuverlässig in dem die Hinterschneidung aufweisenden Bohrloch verankert. Auf diese Weise ist es möglich, eine Anzahl Befestigungselemente in Hinterschneidungen aufweisenden Bohrlöchern in einer Rückseite einer Fassadenplatte zu verankern und die Fassadenplatte später beispielsweise an einer Unterkonstruktion anzuschrauben, ohne dass befürchtet werden muss, dass sich die Verankerung eines oder mehrerer Befestigungselemente lockert oder sogar eines der Befestigungselemente aus der Fassadenplatte löst.

Der Schaft des erfindungsgemäßen Befestigungselements ist vorzugsweise als Hohlschaft mit Innengewinde ausgebildet, da auf der Außenseite des Schafts die Setzhülse angeordnet ist.

Als Rasteinrichtungen weist das Befestigungselement bei einer Ausgestaltung der Erfindung zwei axial voneinander beabstandete Hinterschneidungen an der Setzhülse oder am Schaft des Befestigungselements auf, die mit einer Hinterschneidung am jeweils anderen Teil, also am Schaft oder der Setzhülse, zusammenwirken: Dabei bildet jeweils eine der beiden axial voneinander beabstandeten Hinterschneidungen zusammen mit der mit ihr zusammenwirkenden Hinterschneidung eine der beiden Rasteinrichtungen.

Die Hinterschneidungen können beispielsweise an Nasen oder dgl. ausgebildet sein, die von der Setzhülse nach innen und vom Schaft des Befestigungselements nach außen abstehen. Vorzugsweise sind die Hinterschneidungen als umlaufende Ringschultern beispielsweise an umlaufenden Wulsten ausgebildet. Dies hat den Vorteil, dass das Zusammenwirken der Hinterschneidungen unabhängig von einer eventuellen Drehung der Setzhülse auf dem Schaft ist, die Setzhülse muss deswegen nicht drehgesichert auf dem Schaft geführt sein. Des Weiteren geben umlaufende Ringschultern der Setzhülse einen guten axialen Halt.

Um die Setzhülse beim Verschieben in Richtung des Spreizkonus zum Aufweiten des Spreizrings über die zweite Rasteinrichtung schieben zu können weist die zweite Rasteinrichtung bei einer Ausgestaltung der Erfindung eine Aufgleitfläche, beispielsweise eine Schrägfläche oder eine Fase, auf einer der Hinterschneidung abgewandten Seite auf.

Bei einer Ausgestaltung der Erfindung ist die Setzhülse in etwa bündig mit einem dem Spreizkonus abgewandten Ende des Schafts, wenn sie mit der zweiten Rasteinrichtung in Eingriff steht, die die Setzhülse in ihrer in Richtung des Spreizkonus verschobenen Stellung hält, also bei aufgeweitetem Spreizring. Dies hat zunächst bei der Verankerung des erfindungsgemäßen Befestigungselements den Vorteil, dass die Setzhülse soweit in Richtung des Spreizkonus verschoben wird, bis sie bündig mit dem Ende des Schafts ist, die Aufweitung des Spreizrings ist damit abgeschlossen und die Setzhülse steht mit der zweiten Rasteinrichtung in Eingriff. Weiterer Vorteil dieser Ausgestaltung ist, dass die korrekte Aufweitung des Spreizrings und damit die korrekte Verankerung des Befestigungselements in einem eine Hinterschneidung aufweisenden Bohrloch problemlos optisch kontrollierbar ist. Hinzu kommt der Vorteil, dass das Befestigungselement einfach bündig mit der Rückseite der Fassadenplatte in dieser verankerbar ist, indem die Bohrlochtiefe mit der axialen Länge des Befestigungselements übereinstimmend hergestellt wird.

In bevorzugter Ausgestaltung der Erfindung besteht die Setzhülse aus Kunststoff. Dadurch werden Beschädigungen der Fassadenplatte im Bereich einer Bohrlochwandung bei einer Querbelastung des Befestigungselements, bei der das Befestigungselement mit seiner Setzhülse gegen die Bohrlochwandung gedrückt wird, vermieden. Weiterer Vorteil dieser Ausgestaltung der Erfindung ist, dass eine elastisch und/oder plastisch verformbare Setzhülse aus Kunststoff beim Aufschieben des Spreizrings auf den Spreizkonus axial gestaucht wird. Dadurch vergrößert die Setzhülse ihre Wanddicke und verspannt dadurch das erfindungsgemäße Befestigungselement spielfrei im Bohrloch.

Die Erfindung wird nachfolgend anhand eines in der Zeichnung dargestellten Ausführungsbeispiels näher erläutert. Es zeigen:
- Figur 1: ein erfindungsgemäßes Befestigungselement in einem Ausgangszustand im Achsschnitt; und
- Figur 2: das Befestigungselement aus Figur 1 in verankertem Zustand.

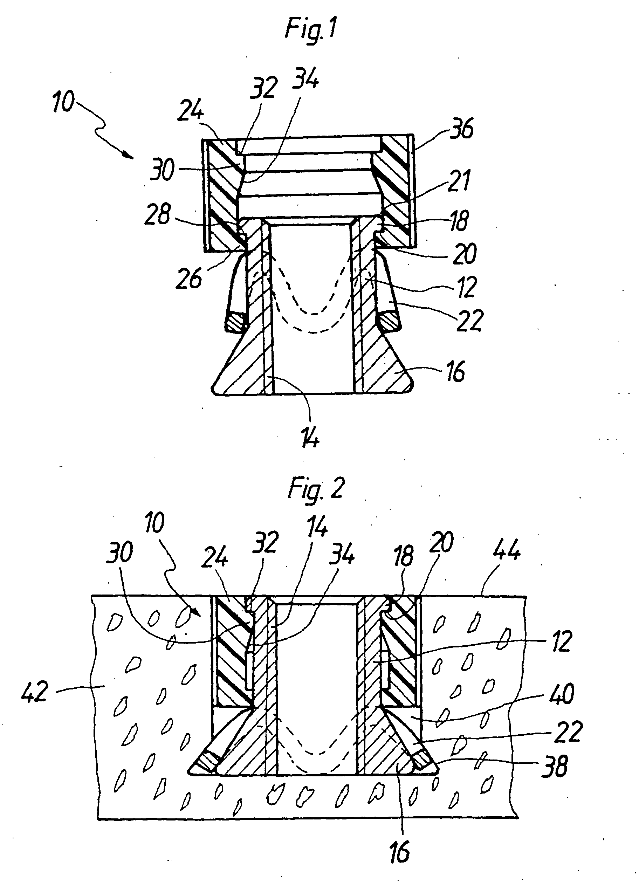

Das in Figur 1 dargestellte, erfindungsgemäße Befestigungselement 10 weist einen Hohlschaft 12 auf, der mit einem Innengewinde 14 versehen ist. An einem Ende ist der Hohlschaft 12 einstückig mit einem Spreizkonus 16. Am anderen Ende steht ein umlaufender Ringbund 18 rechteckigen Querschnitts nach außen vom Hohlschaft 12 ab. Eine dem Spreizkonus 16 zugewandte Fläche des Ringbundes 18 bildet eine Ringschulter 20, die Teil zweier noch zu beschreibender Rasteinrichtungen des Befestigungselements 10 ist. Auf seiner dem Spreizkonus 16 abgewandten Seite ist der Ringbund 18 mit einer Fase 21 versehen. Der Hohlschaft 12 mit dem Spreizkonus 16 besteht aus Stahl.

Auf den Hohlschaft 16 ist ein Spreizring 22 axial verschieblich aufgesetzt. Der Spreizring 22 weist von der Seite gesehen eine Wellung auf, so dass er durch Aufschieben auf den Spreizkonus 16 aufweitbar ist. Der Spreizring 22 besteht aus Stahl, er weist einen quadratischen Ringquerschnitt auf.

Auf einer dem Spreizkonus 16 abgewandten Seite des Spreizrings 22 ist eine Setzhülse 24 aus Kunststoff axial verschieblich auf den Hohlschaft 12 aufgesetzt. An ihrem dem Spreizkonus 16 zugewandten Ende weist die Setzhülse 24 einen ersten, nach innen stehenden Ringbund 26 mit rechteckigem Querschnitt auf, dessen dem Spreizkonus 16 abgewandte Fläche eine Ringschulter 28 bildet, die Bestandteil der noch zu erläuternden, ersten Rasteinrichtung 20, 28 des erfindungsgemäßen Befestigungselements 10 ist.

Nahe einem dem Spreizkonus 16 abgewandten Ende weist die Setzhülse 24 einen zweiten, nach innen abstehenden Ringbund 30 auf, dessen dem Spreizkonus 16 abgewandte Fläche eine Ringschulter 32 bildet, die Bestandteil der zweiten Rasteinrichtung 20, 32 des Befestigungselements 10 ist. Auf einer dem Spreizkonus 16 zugewandten Seite weist der Ringbund 30 eine Fase auf, die eine Aufgleitfläche 34 bildet.

An ihrer Außenfläche weist die Setzhülse 24 eine Anzahl über den Umfang verteilt angeordnete, achsparallel verlaufende Abstützrippen 36 auf.

Zum Zusammenbau des Befestigungselements 10 aus seinen drei Einzelteilen wird zuerst der Spreizring 22 und danach die Setzhülse 24 auf den Hohlschaft 12 aufgesetzt. Beim Aufsetzen der Setzhülse 24 weitet die Fase 21 des Ringbundes 18 des Hohlschafts 12 die Setzhülse 24 elastisch auf, so dass der nach innen stehende, erste Ringbund 26 der Setzhülse 24 über den nach außen stehenden Ringbund 18 des Hohlschafts 12 hinweg gleiten kann und anschließend auf einer dem Spreizkonus 16 zugewandten Seite des Ringbundes 18 einrastet. Die Ringschultern 20, 28 der genannten Ringbünde 18, 26 hintergreifen einander, so dass diese beiden, die erste Rasteinrichtung 20, 28 bildenden Ringschultern 20, 28 die Setzhülse 24 verliersicher auf dem Hohlschaft 12 halten. Der zwischen der Setzhülse 24 und dem Spreizkonus 16 auf den Hohlschaft 12 aufgesetzte Spreizring 22 ist dadurch ebenfalls verliersicher gehalten.

Das erfindungsgemäße Befestigungselement 10 ist, wie in Figur 2 dargestellt, zur Verankerung in einem eine beispielsweise konische Hinterschneidung 38 aufweisenden Bohrloch 40 vorgesehen. Das erfindungsgemäße Befestigungselement 10 benötigt zu seiner Verankerung ein Bohrloch 40 mit nur geringer Bohrlochtiefe und eignet sich dadurch zur Verankerung in beispielsweise einer Fassadenplatte 42, die nur geringe Bohrlochtiefen erlaubt.

Das Befestigungselement 10 wird in der in Figur 1 dargestellten Ausgangsstellung in das Bohrloch 40 in der Fassadenplatte 42 eingesetzt, bis es mit seinem Spreizkonus 16 auf. einem Grund des Bohrlochs 40 aufsitzt. Die Bohrlochtiefe ist so gewählt, dass der Hohlschaft 12 bündig mit einer Rückseite 44 der Fassadenplatte 42 ist.

Nach dem Einsetzen des Befestigungselements 10 in das Bohrloch 40 wird die Setzhülse 24 in Richtung des Spreizkonus 16 verschoben. Dabei schiebt die Setzhülse 24 den Spreizring 22 auf den Spreizkonus 16, wobei der Spreizkonus 16 den Spreizring 22 aufweitet. Durch seine Aufweitung gelangt der Spreizring 22 in formschlüssigen Eingriff mit der Hinterschneidung 38 des Bohrlochs 40, der Spreizring 22 hintergreift die Hinterschneidung 38 und verankert dadurch das Befestigungselement 10 im Bohrloch 40.

Zum Verschieben der Setzhülse 24 kann eine Gewindestange in das Innengewinde 14 des Hohlschafts 12 eingeschraubt und eine Mutter auf die Gewindestange aufgedreht werden, die die Setzhülse 24 in Richtung des Spreizkonus 16 verschiebt (nicht dargestellt). Die Mutter wird soweit auf der in das Innengewinde 14 eingeschraubten Gewindestange gedreht, bis sie bündig am Hohlschaft 12 anliegt. Dann ist auch die Setzhülse 24 bündig mit dem Hohlschaft 12 und mit der Rückseite 44 der Fassadenplatte 42. Beim Schieben des Spreizrings 22 auf den Spreizkonus 16 wird die Setzhülse 24 axial gestaucht und weitet sich infolgedessen in Querrichtung aus. Dadurch verspannt die Setzhülse 24 den Hohlschaft 12 im Bohrloch 40 und stützt das Befestigungselement 10 gegen Querbelastung an der Fassadenplatte 42 ab.

Beim Verschieben der Setzhülse 24 in Richtung des Spreizkonus 16 gleitet die Aufgleitfläche 34 des zweiten, nach innen stehenden Ringbundes 30 der Setzhülse 24 auf den nach außen stehenden Ringbund 18 des Hohlschafts 12 auf. Sobald der zweite Ringbund 30 der Setzhülse 24 den Ringbund 18 des Hohlschafts 12 überwunden hat, rastet der zweite Ringbund 30 der Setzhülse 24 auf der dem Spreizkonus 16 zugewandten Seite des Ringbundes 18 des Hohlschafts 12 ein, die Ringschultern 20, 32 der beiden genannten Ringbünde 18, 30 hintergreifen einander und halten die Setzhülse 24 in der in Richtung des Spreizkonus 16 verschobenen Stellung. In dieser Stellung hält die Setzhülse 24 den Spreizring 22 in dessen auf den Spreizkonus 16 aufgeschobener, aufgeweiteten Stellung. Die beiden Ringschultern 20, 32 des zweiten Ringbundes 30 der Setzhülse 24 und des Hohlschafts 12 bilden die zweite Rasteinrichtung 20, 32 des erfindungsgemäßen Befestigungselements 10, die die Setzhülse 24 in der in Richtung des Spreizkonus 16 verschobenen Stellung auf dem Hohlschaft 12 sichern. Die zweite Rasteinrichtung 20, 32 stellt sicher, dass der aufgeweitete Spreizring 22 nicht vom Spreizkonus 16 herunterrutschen kann, sondern auf diesem und damit aufgeweitet bleibt. Dadurch ist die Verankerung des Befestigungselements 10, in dem die Hinterschneidung 38 aufweisenden Bohrloch 40 in der Fassadenplatte 42 sichergestellt unabhängig davon, ob in das Innengewinde 14 des Hohlschafts 12 etwas eingeschraubt ist oder nicht. Mit dem in der Fassadenplatte 42 verankerten Befestigungselement 10 lässt sich die Fassadenplatte 42 beispielsweise an einer nicht dargestellten Unterkonstruktion befestigen, wobei vorzugsweise eine Anzahl Befestigungselemente 10 in Bohrlöchern 40 mit Hinterschneidung 38 in der Fassadenplatte 42 verankert werden.

## Patentansprüche

1. Befestigungselement mit einem einen Spreizkonus aufweisenden Schaft, und mit einem auf den Schaft oder den Spreizkonus aufgesetzten Spreizring, der durch Aufschieben auf den Spreizkonus aufweitbar ist, **dadurch gekennzeichnet, dass** das Befestigungselement (10) eine Setzhülse (24) aufweist, die auf einer dem Spreizkonus (16) abgewandten Seite des Spreizrings (22) axial verschieblich auf den Schaft (12) aufgesetzt ist und die durch Verschieben in Richtung des Spreizkonus (16) den Spreizring (22) auf den Spreizkonus (16) aufschiebt und dadurch aufweitet, und dass das Befestigungselement (10) zwei Rasteinrichtungen (20, 28; 20, 32) aufweist, deren erste (20, 28) die Setzhülse (24) bei nicht auf den Spreizkonus (16) aufgeschobenem Spreizring (22) verliersicher auf dem Schaft (12) hält und deren zweite (20, 32) die Setzhülse (24) in einer den Spreizring (22) in der auf den Spreizkonus (16) aufgeschobenen, aufgeweiteten Stellung haltenden Stellung auf dem Schaft (12) hält.

2. Befestigungselement nach Anspruch 1, **dadurch gekennzeichnet, dass** der Schaft (12) als Hohlschaft (12) mit einem Innengewinde (14) aufgebildet ist.

3. Befestigungselement nach Anspruch 1, **dadurch gekennzeichnet, dass** die beiden Rasteinrichtungen (20, 28; 20, 32) zwei axial voneinander beabstandete Hinterschneidungen (28, 32) in der Setzhülse (24) und eine mit diesen beiden Hinterschneidungen (28, 32) zusammenwirkende Hinterschneidung (20) am Schaft (12) aufweist.

4. Befestigungselement nach Anspruch 1, **dadurch gekennzeichnet, dass** die beiden Rasteinrichtungen zwei axial voneinander beabstandete Hinterschneidungen am Schaft (12) und eine mit diesen beiden Hinterschneidungen zusammenwirkende Hinterschneidungen in der Setzhülse aufweist.

5. Befestigungselement nach Anspruch 3 oder 4, **dadurch gekennzeichnet, dass** die Hinterschneidungen (20, 28, 32) als umlaufende Ringschultern ausgebildet sind.

6. Befestigungselement nach Anspruch 3 oder 4, **dadurch gekennzeichnet, dass** eine die zweite Rasteinrichtung (20, 32) bildende Hinterschneidung (32) eine Aufgleitfläche (34) auf einer der Hinterschneidung (32) abgewandten Seite aufweist.

7. Befestigungselement nach Anspruch 1, **dadurch gekennzeichnet, dass** die Setzhülse (24) in der den Spreizring (22) in der auf den Spreizkonus (16) aufgeschobenen, aufgeweiteten Stellung haltenden Stellung in etwa bündig mit einem dem Spreizkonus (16) abgewandten Ende des Schafts (12) ist.

8. Befestigungselement nach Anspruch 1, **dadurch gekennzeichnet, dass** die Setzhülse (24) aus Kunststoff besteht.

## Claims

1. Fastening element having a shank that comprises an expander cone, and having an expansible ring that is positioned on the shank or on the expander cone, which expansible ring is arranged to be expanded by pushing it onto the expander cone, **characterized in that** the fastening element (10) comprises a setting sleeve (24) that is positioned on the side of the expansible ring (22) that is remote from the expander cone (16) to be displaceable axially on the shank (12) and which, by displacement in the direction of the expander cone (16) pushes the expansible ring (22) onto the expander cone (16) and thereby expands it, and **in that** the fastening element (10) comprises two catch devices (20, 28; 20, 32), the first (20, 28) of which holds the setting sleeve (24) captive on the shank (12) when the expansible ring (22) has not been pushed onto the expander cone (16) and the second (20, 32) of which holds the setting sleeve (24) on the shank (12) in a position that holds the expansible ring (22) in the expanded position in which it has been pushed onto the expander cone (16).

2. Fastening element according to claim 1, **characterized in that** the shank (12) is in the form of a hollow shank (12) having an intemal thread (14).

3. Fastening element according to claim 1, **characterized in that** the two catch devices (20, 28; 20, 32) comprise two undercut portions (28, 32) in the setting sleeve (24) spaced apart axially from one another and an undercut portion (20) on the shank (12) that co-operates with those two undercut portions (28, 32).

4. Fastening element according to claim 1, **characterized in that** the two catch devices comprise two undercut portions on the shank (12) spaced apart axially from one another and an undercut portion in the setting sleeve that co-operates with those two undercut portions.

5. Fastening element according to either claim 3 or claim 4, **characterized in that** the undercut portions (20, 28, 32) are in the form of circumferential annular shoulders.

6. Fastening element according to either claim 3 or claim 4, **characterized in that** an undercut portion (32) forming the second catch device (20, 32) comprises a slide-on surface (34) on the side remote from the undercut portion (32).

7. Fastening element according to claim 1, **characterized in that**, in the position in which the setting sleeve (24) holds the expansible ring (22) in the expanded position in which it has been pushed onto the expander cone (16), the setting sleeve (24) is approximately flush with the end of the shank (12) that is remote from the expander cone (16).

8. Fastening element according to claim 1, **characterized in that** the setting sleeve (24) is made of plastics.

## Revendications

1. Élément de fixation comprenant une tige, munie d'un cône d'expansion, et une bague expansible, qui est emmanchée sur la tige ou le cône d'expansion et qui est apte à s'élargir en coulissant sur le cône d'expansion, **caractérisé en ce que** l'élément de fixation (10) comporte un manchon de positionnement (24) qui est emmanché sur la tige (12) de manière mobile axialement sur un côté de la bague expansible (22) opposé au cône d'expansion (16) et qui, par un coulissement en direction du cône d'expansion (16), pousse la bague expansible (22) sur le cône d'expansion (16) et l'élargit ainsi, et **en ce que** l'élément de fixation (10) comporte deux systèmes de blocage (20, 28 ; 20, 32), parmi lesquels le premier (20, 28) maintient de manière imperdable la bague expansible (22) sur la tige (12) dans la position non coulissée sur le cône d'expansion (16), et le deuxième (20, 32) maintient le manchon de positionnement (24) sur la tige (12) dans une position bloquant la bague expansible (22) dans la position élargie coulissée sur le cône d'expansion (16).

2. Élément de fixation selon la revendication 1, **caractérisé en ce que** la tige (12) est conçue sous forme de tige creuse (12) munie d'un taraudage (14).

3. Élément de fixation selon la revendication 1, **caractérisé en ce que** les deux systèmes de blocage (20, 28 ; 20, 32) comportent deux contre-dépouilles (28, 32), réalisées dans le manchon de positionnement (24) à une distance axiale l'une de l'autre, et une contre-dépouille (20), réalisée sur la tige (12) et coopérant avec lesdites deux contre-dépouilles (28, 32).

4. Élément de fixation selon la revendication 1, **caractérisé en ce que** les deux systèmes de blocage comportent deux contre-dépouilles réalisées sur la tige (12) à une distance axiale l'une de l'autre et une contre-dépouille réalisée dans le manchon de positionnement et coopérant avec lesdites deux contre-dépouilles.

5. Élément de fixation selon la revendication 3 ou 4, **caractérisé en ce que** les contre-dépouilles (20, 28, 32) sont conçues sous forme d'épaulements circulaires périphériques.

6. Élément de fixation selon la revendication 3 ou 4, **caractérisé en ce qu'**une contre-dépouille (32) formant le deuxième système de blocage (20, 32) comporte une surface de glissement (34) sur un côté opposé à la contre-dépouille (32).

7. Élément de fixation selon la revendication 1, **caractérisé en ce que** le manchon de positionnement (24), dans la position bloquant la bague expansible (22) dans la position élargie coulissée sur le cône d'expansion (16), est pratiquement situé à fleur de l'extrémité de la tige (12) opposée au cône d'expansion (16).

8. Élément de fixation selon la revendication 1, **caractérisé en ce que** le manchon de positionnement (24) est réalisé en matière plastique.
